# EUROPEAN PATENT APPLICATION

(11) **EP 0 599 798 A1**
(43) Date of publication of application: **01.06.1994**
(21) Application number: 93870227.1
(22) Date of filing: 24.11.1993
(51) Int. Cl.: A01G 9/02

(54) **Plastic flowerpot**

(30) Priority: 25.11.1992 BE 9201028
(71) Applicant: THOVADEC, B-9070 Destelbergen (BE)
(72) Inventor: Van De Velde, Luc Josef, B-9230 Wetteren (BE)
(74) Representative: Pieraerts, Jacques

(57) **Abstract**

The invention relates to a flowerpot having a bottom (1) and upright side walls (2), which flowerpot is provided at the bottom with sideward holes (4) for irrigating and/or draining the flowerpot, each of said openings (4) debouching in a cavity (5) which is at least open at the bottom and which is located substantially against one of said side walls (2), characterised in that said cavity consists of a chamber (5) which is closed off at least partially in front of the irrigation and/or drain hole (4) by a screen (6) extending at least along the upright side walls (8) of the chamber (5) so as to check outward root growth.

## Description

The present invention relates to a plastic flowerpot having a bottom and upright side walls, which flowerpot is provided at the bottom with sideward holes for irrigating and/or draining the interior of the flowerpot, each of said openings debouching in a cavity which is at least open at the bottom and which is located substantially against one of said side walls.

In general, a flowerpot has to comprise sideward openings in order to allow a quick irrigation and/or draining of the flowerpot. Without such sideward openings, the interior of the flowerpot would remain too long too humid, for example after a heavy rain. In particular, after such a rain, which makes the soil onto which the flowerpots are placed muddy, the holes in the bottom of the flowerpots cannot provide for a sufficient drainage. It is clear that a too humid condition has an undesired negative influence on the root growth. When use is made of a so-called "ebb and flood" system, such sideward holes are also required to ensure a sufficiently quick irrigation of the flowerpots.

However, sideward holes in a flowerpot offer the drawback of allowing the rooths to grow very quickly through these holes to the outside of the flowerpot. In practice, flowerpots of the hereabove indicated type are already known which are specially designed to check this lateral root growth. In these known flowerpots, the sideward holes are located in the interior of the flowerpot and are connected by means of continuous tunnel shaped cavities to the exterior of the flowerpot. Since roots tend to grow along the side walls of the flowerpot, and thus over the tunnel-shaped cavity, a smaller number of roots will grow out of the flowerpot. A drawback of this known flowerpot is, however, that still a considerable number of roots will grow through the tunnel-shaped cavity out of the flowerpot.

An object of the present invention is therefore to provide a flowerpot having sideward irrigation and/or drain openings wherein the lateral root growth out of the flowerpot is checked to a still larger extent.

Said cavity consists hereto of a chamber which is closed off at least partially in front of the irrigation and/or drain hole by a screen extending at least along the upright side walls of the chamber so as to check the outward root growth.

When in the flowerpot according to the invention a number of roots penetrate through the sideward irrigation and/or drain openings into the chamber, the presence of the screen and the larger volume of the chamber will result in a smaller number of roots growing actually laterally through the flowerpot compared to the situation with the tunnel-shaped cavity. Indeed, the roots tend to grow also in the chamber along the walls of this chamber. The screen which extends at least along the upright side walls of the chamber, will prevent the roots from growing without any problem towards the outside but will rather make them, on the contrary, to grow back inwards. The screen provides further for a protection of the roots against incident light so as to avoid undesired root burns.

In a preferred embodiment of the flowerpot according to the invention, said screen has an opening for aerating the interior of the flowerpot.

The flowerpot according to the invention offers the advantage of allowing the moulds for manufacturing this flowerpot to be adjusted easily to different screen sizes, or in other words to different sizes of the aeration opening in the screen, and this according to the specification of the plant breeder for who the flowerpots are destined. Indeed, the size of the aeration openings has to be chosen in function of the desired aeration capacity which is itself a.o. dependent on the substrate in the flowerpot and the type of plant grown therein.

Further particularities and advantages of the invention will become apparent from the following description of a particular embodiment of the flowerpot according to the invention. This description is only given by way of example and is not intended to limit the scope of the invention. The reference numerals relate to the annexed drawings wherein :
Figure 1 shows a longitudinal section through the lowermost portion of a flowerpot according to the invention ;
figure 2 shows a longitudinal section through a portion of two mutually inserted flowerpots corresponding to the flowerpot from figure 1 ; and
figure 3 shows, on a smaller scale, a top plan view on the flowerpot from figure 1.

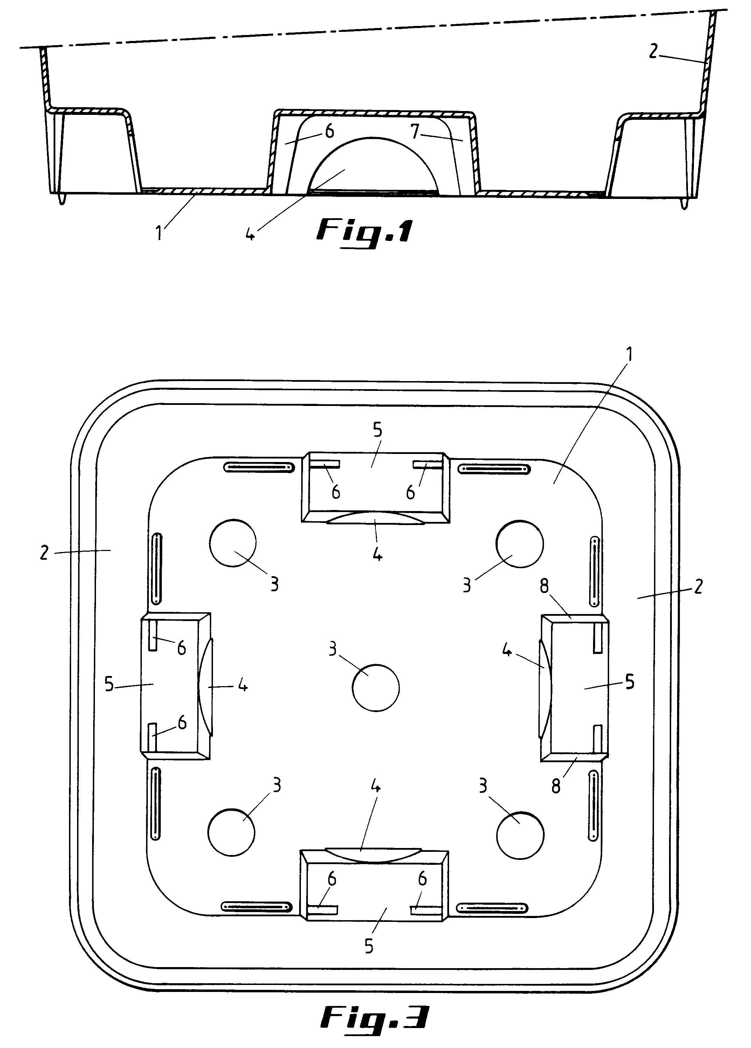

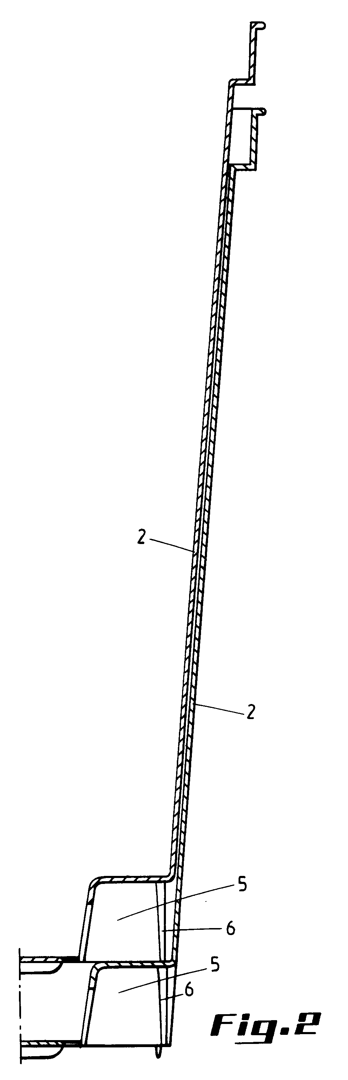

In these three figures, the same reference numerals relate to the same or to analogous elements.

The flowerpot according to the invention shown in the figures has as usual a bottom 1 and upright side walls 2. Although the bottom has in this case a rather square shape, it will be clear that this shape is not limiting for the invention and that it might for example also be circular.

The bottom 1 comprises downward holes 3. Since these holes 3 cannot provide for an efficient irrigation and/or drainage of the interior of the flowerpot when it is placed for example onto a muddy soil, the presence of sideward irrigation and/or drain holes 4 is an essential feature. These sideward holes 4 do not debouche directly outside the flowerpot but, on the contrary, in a cavity 5 which is at least open at the bottom and which is located substantially against one of said sidewalls 2. The purpose of this cavity 5 consists in disposing the irrigation and/or drain holes 4 more towards the middle of the flowerpot so that a smaller number of plant roots, which grow mainly along the side walls of the flowerpot, will grow through the holes 4 out of the flowerpot.

In the flowerpot according to the invention, the cavity 5 consists of a chamber 5 which is at least partially closed off in front the sideward irrigation and/or drain holes 4 in this chamber 5 by a screen 6. From the figures it appears clearly that the chamber 5 is wider than a tunnel-shaped connection between the hole 4 and the exterior of the flowerpot.

This screen 6 may possibly close off the chamber 5 entirely at its lateral side so that no more lateral root growth out of the flowerpot is possible. Preferably, the screen 6 has however an opening 7 for aerating the interior of the flowerpot. The size of this opening may be chosen in function of the desired aeration which is itself a.o. dependent on the nature of the substrate present in the flowerpot and the kind of plant which is grown therein. Indeed, the hereabove described flowerpot structure allows an easy adaptation of the mould used for the manufacture of these flowerpot to the desired size of the aeration opening.

Essential for the invention is the fact that the screen extends at least along the upright side walls 8 of the chamber 5. The few roots growing mainly along these side walls 8 through the chamber 5 can therefore not directly grow out of the chamber 5. Moreover, the screen 6 provides for a shield for the roots present in the chamber 5 against too fierce sunlight and also against a too large air circulation effecting otherwise a too quick drying of the chamber 5 and especially also of the interior of the flowerpot.

In a preferred embodiment, the aeration opening 7 in the screen 6 is larger than the irrigation and/or drain hole 4 of the corresponding chamber 5 so that a sufficient aeration of the interior of the flowerpot is achieved in this way. Such large aeration openings 7 are only possible by providing a chamber 5 instead of a tunnel-shaped cavity like in the herein-above mentioned known flowerpots. The wide chamber 5 enables in other words a larger variation of aeration openings. Compared to a tunnel-shaped cavity, the chamber 5 has a cross-section taken according to the side wall against which this chamber is situated, which is considerably larger than the irrigation and/or drain hole 4 in this chamber 5. This hole 4 does not necessarily have to consist of one single hole but the chamber 5 may possibly be provided with several, smaller irrigation and/or drain holes.

Like most of the flowerpots, the flowerpot according to the invention has preferably also such a shape that it can be stacked in each other. In this case, the screens 6 are arranged in such a manner that they rest, in a stack of flowerpots, onto a corresponding chamber of a flowerpot disposed thereunder. In this way, the screens prevent the flowerpots from being inserted too far into one another. In such a flowerpot, spacing ribs have no longer to be provided on the bottom, which ribs may possibly have a negative influence on the root development.

From the above description wherein the function and the advantages of the different portions of the flowerpot have been illustrated clearly, it will be apparent that the invention is not limited to the described embodiment but that many modifications can be applied thereto without leaving the scope of the present patent application.

## Claims

1. A plastic flowerpot having a bottom (1) and upright side walls (2), which flowerpot is provided at the bottom with sideward holes (4) for irrigating and/or draining the interior of the flowerpot, each of said openings (4) debouching in a cavity (5) which is at least open at the bottom and which is located substantially against one of said side walls (2), characterised in that said cavity consists of a chamber (5) which is closed off at least partially in front of the irrigation and/or drain hole (4) by a screen (6) extending at least along the upright side walls (8) of the chamber (5) so as to check the outward root growth.

2. A plastic flowerpot according to claim 1, characterised in that said screen (6) has an opening (7) for aerating the interior of the flowerpot.

3. A plastic flowerpot according to claim 2, characterised in that said aeration opening (7) in the screen (6) is larger than the irrigation and/or drain hole (4) in the chamber (5) which is laterally closed off partially by this screen (6).

4. A plastic flowerpot according to any one of the claims 1 to 3, characterised in that the screen (6) is disposed substantially in the extension of the side wall (2) against which the respective chamber (5) is located.

5. A plastic flowerpot according to any one of the claims 1 to 4, characterised in that it has a shape such as to be stackable into one another, said screens (6) being arranged for resting, in a stack of these flowerpots, onto a corresponding chamber (5) of a flowerpot disposed thereunder in order to prevent the flowerpots from being inserted too far into each other.

6. A plastic flowerpot according to any one of the claims 1 to 5, characterised in that said chamber (5) has a larger cross-sectional area taken according to the side wall (2) against which this chamber (5) is located than the irrigation and/or drain hole (4) in this chamber (5).
